# EUROPEAN PATENT APPLICATION

(11) **EP 1 686 823 A1**
(43) Date of publication of application: **02.08.2006**
(21) Application number: 05300080.8
(22) Date of filing: 01.02.2005
(51) Int. Cl.: H04Q 7/38

(54) **Method and apparatus for restricting the use of communication devices**

(71) Applicant: Hewlett-Packard Development Company, L.P., Houston, Texas 77070 (US)
(72) Inventor: Kyriakides, Lionel, 38190, Brignoud (FR); Wieczorek, Philippe, 38330, Saint Ismier (FR); Berranger, Jean-Alexis, 38240, Meylan (FR)
(74) Representative: Lloyd, Richard Graham

(57) **Abstract**

According to one aspect of the present invention, there is provided a communication network comprising a plurality of connection modules each operable for enabling one or more communication devices to connect to the network to access a set of communication functions provided by the network, the network being arranged such that communication devices connected through a predetermined connection module have access only to a sub-set of the set of communication functions.

## Description

The present invention relates to the field of communications, and particularly, but not exclusively, to methods and apparatus for restricting the use, under certain circumstances, that some communication devices may make of a communications network.

Over recent years the use of communication devices, and especially mobile communication devices such as mobile radio or cellular telephones, has increased at a phenomenal rate. For instance, in many countries the majority of the population own a mobile radiotelephone enabling mobile radiotelephone owners to be contactable round the clock over wide geographic areas. The benefits of being contactable 24 hours a day are well known.

However, it is also known that use of mobile radiotelephones in some situations is becoming increasingly seen as being socially unacceptable - during a theatre performance, whilst at the cinema, in hospitals, are but a few examples.

Initial efforts at trying to make all mobile radiotelephone users conform to a socially acceptable set of mobile radiotelephone etiquette standards have largely failed, at least for a minority of users. However, it is generally accepted that the lack of mobile radiotelephone etiquette by a few users is sufficient to cause significant annoyance and irritation to the general public in certain circumstances. For example, during a classical music concert it takes only one person to receive or make a call on their mobile radiotelephone to cause annoyance to every person present at the concert.

In a bid to counter this problem it is known to use radio frequency jamming devices which act to block, jam, or otherwise interfere with, mobile radiotelephone signals within a given area thereby preventing a mobile radiotelephone from communicating with the mobile radiotelephone network thereby preventing the user to make or receive calls. W09856192 describes such a system.

However, whilst preventing the making and receiving of calls is generally considered advantageous since it effectively prevents obtrusive use of mobile radiotelephones, such jamming systems also prevent the use of non-obtrusive communication methods, such as the sending of short message system (SMS) messages or the like, use of mobile data networks to access the Internet, and so on. Furthermore, such jamming systems typically prevent all communication between all mobile radiotelephones and their respective mobile radiotelephone networks, and provide no way of preventing selected mobile radiotelephones from being jammed.

Accordingly, one aim of the present invention is to overcome, or at least alleviate, at least some of the above-mentioned problems.

According to a first aspect of the present invention, there is provided a communication network comprising a plurality of connection modules each operable for enabling one or more communication devices to connect to the network to access a set of communication functions provided by the network. The network is arranged such that communication devices connected through a predetermined connection module have access only to a sub-set of the set of communication functions.

Advantageously, this enables use of some or all of the functionality provided by or available through a network to be restricted in a controlled manner.

Suitably, the communication network may further comprise a data store for storing details of which of the sub-set of functions access is available to communication devices connected through the predetermined connection module.

The data store may be arranged for further storing details of individual communication devices along with a respective associated sub-set of functions which each communication device may access.

Suitably, the sub-set of the set of functions may range from containing none of the set of functions to containing the whole of the set of functions.

Suitably, the communication network may be a mobile telephony network, in which case the connection modules may be transceiver stations and the communication devices may be mobile radiotelephones.

The communication network may further comprise a switching element, the switching element being able to identify a communication device connected to the predetermined connection module and being arranged to allow access to a sub-set of functions as defined in the data store.

The set of communication functions may suitably include functions relating to at least one of: making a telephone call, receiving a telephone call, sending a text message, receiving a text message, and accessing a data network.

According to a second aspect of the present invention, there is provided a method, in a communication network, of providing a communication device with access to a set of functions provided by the network, the communication device being connectable to the network through one of a plurality of connection modules each operable to provide access to the set of communication functions provided by the network. The method comprises determining whether a communication device is connected to the network through a predetermined connection module, and where it is so determined, restricting access to a sub-set of the communication functions.

Suitably the method may further comprise storing details of which of the sub-set of functions are available to a communication device connected through the predetermined connection module, and providing a so connected communication device with access to the sub-set of functions in accordance with the stored details.

The method may further comprise storing details of individual communication devices along with a respective associated sub-set of functions, and providing each communication device connected through the predetermined connection module with access to the sub-set of functions associated therewith.

The step of storing details of the sub-set of functions available may range from storing none of the set of functions to storing details the whole set of functions.

Suitably, the method may be adapted for use with a mobile telephony network, in which case the method may be further adapted for use where the connection modules are transceiver stations and where the communication devices are mobile radiotelephones.

The communication network may further comprise a switching element operable to identify a communication device connected to the predetermined connection module, in which case the method may further comprise the switching unit restricting access to the set of functions according to the stored details.

Suitably, the method may be adapted for use where the set of communication functions includes functions relating to at least one of: making a telephone call, receiving a telephone call, sending a text message, receiving a text message, and accessing a data network.

According to a third aspect of the present invention, there is provided with a communication network adapted for operating in accordance with any of the above method steps.

Embodiments of the invention will now be described, by way of example only, with reference to the accompanying drawings, in which:
Figure 1 is a block diagram of a typical mobile radiotelephone network, such as a GSM network, according to the prior art;
Figure 2 is a block diagram of a mobile radiotelephone network 200 according to an embodiment of the present invention;
Figure 3 is a message/event flow diagram showing example communication messages and events which may be sent between various elements of the radiotelephone network 200 of Figure 2 according to an embodiment of the present invention;
Figure 4 is a message/event flow diagram showing example communication messages and events which may be sent between various elements of the radiotelephone network 200 when a mobile station places an outgoing call according to an embodiment of the present invention;
Figure 5 is a message/event flow diagram showing example communication messages and events which may be sent between various elements of the radiotelephone network 200 when a mobile station is sent a short message system (SMS) message according to an embodiment of the present invention;
Figure 6 is a message/event flow diagram showing example communication messages and events which may be sent between various elements of the radiotelephone network 200 when a call is made to a mobile station according to an embodiment of the present invention;
Figure 7 is a message/event flow diagram showing example communication messages and events which may be sent between various elements of the radiotelephone network 200 when a mobile station makes an outgoing call according to an embodiment of the present invention; and
Figure 8 is a message/event flow diagram showing example communication messages and events which may be sent between various elements of the radiotelephone network 200 when a mobile station is sent an SMS message according to an embodiment of the present invention.

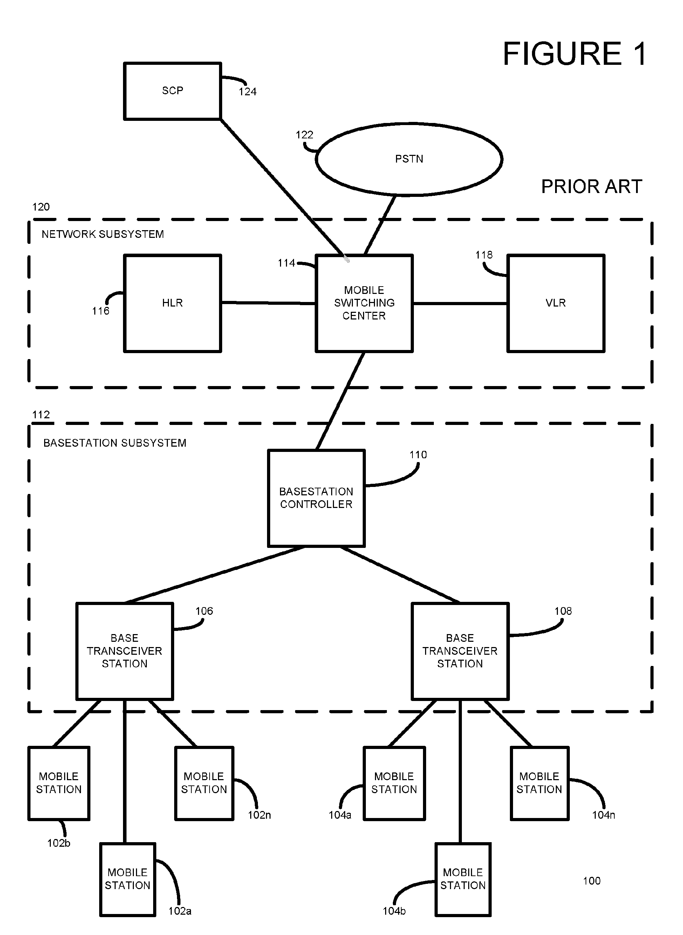

Referring now to Figure 1, there is shown a block diagram of a typical mobile radiotelephone network 100, such as a GSM network, according to the prior art.

The radiotelephone network 100 comprises a number of mobile stations, such as portable radiotelephones, 102a to 102n and 104a to 104n which communicate with a network subsystem 120 through a base station subsystem 112.

The mobile stations 102a to 102n communicate with a base transceiver station 106 via individual radio links. A base transceiver station (BTS) comprises a radio transceiver which enables mobile stations within the range of the base transceiver station to access the radiotelephone network 100, for example to make and receive telephone calls. Since a base transceiver station only has a limited range, a number of geographically-distributed base transceiver stations are typically provided, such as the base transceiver station 108, to provide access to the radiotelephone network 100 over a wide geographical area. The base transceiver station 108 enables mobile stations 104a to 104n located in the geographical area covered by the base transceiver station 108 to access the radiotelephone network 100. The range provided by a base transceiver station may vary, and the geographical area covered by a BTS is typically referred to as a cell.

A base station controller (BSC) 110 manages the radio resources for one or more base transceiver stations and acts as the connection between each mobile station and the mobile switching centre 114.

The mobile switching centre 114 acts like a conventional switching node of a public switched telephone network (PSTN) and provides additional functionality needed to handle a mobile subscriber through use of a home location register (HLR) 116 and a visitor location register (VLR) 118. The MSC 114 also provides access to additional MSCs within the or within other radiotelephone networks, and also provides access to conventional PSTN networks, such as PSTN 122. The MSC 114 also has access to a service control point (SCP) 124 which may be located either within or external to the network sub-system 120. Those skilled in the art will appreciate that, for reasons of clarity, some elements of a typical radiotelephone network have not been described. It will be appreciated, however, that the operation and architecture of such radiotelephone networks are well understood by those skilled in the art.

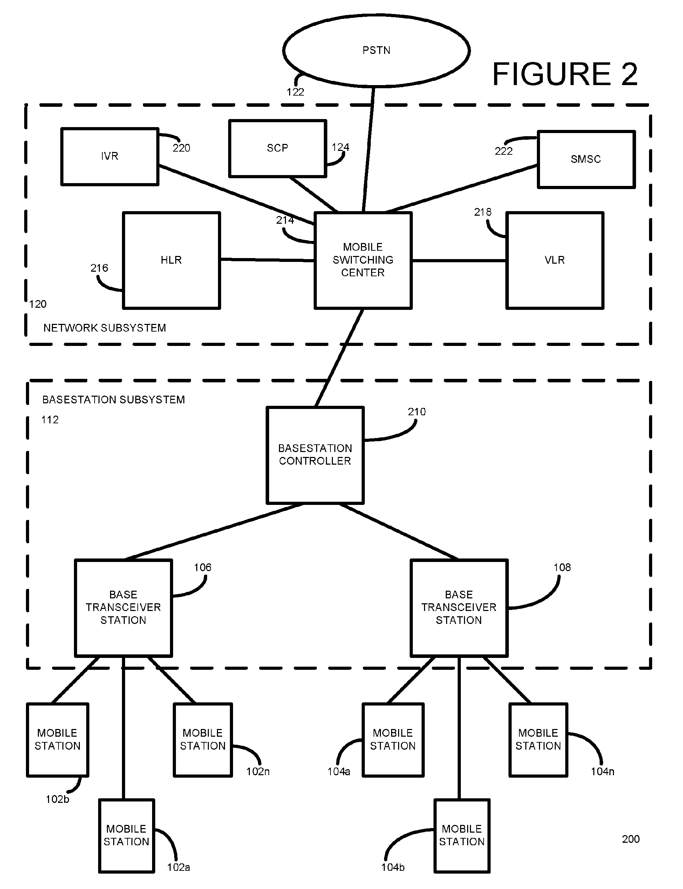

An embodiment of the present invention will now be described with reference to Figure 2, which is a block diagram of a mobile radiotelephone network 200 according to an embodiment of the present invention.

The mobile radiotelephone network 200 of Figure 2 is largely similar to that of network 100 shown in Figure 1, and like references indicate like elements. However, the present embodiment includes a modified base station controller 210, a modified mobile switching centre 214, a modified HLR 216 and a modified VLR 218, the operation of which will be described below.

The present embodiment provides that one or more of the base transceiver stations, such as the base transceiver station 106, is designated as a restricted access BTS (hereinafter referred to as a RA-BTS). Thereby, any mobile station, such as mobile stations 102a to 102n, connected through the RA-BTS may only be able access a limited set of the functionality offered by the mobile radiotelephone network 200, as is described further below. The limited set of functionality could vary from having no access to having full access, as will also be described below.

In this way, a RA-BTS may be provided within, for example, a theatre to restrict the use that may be made of the mobile radiotelephone network 200 so as to prevent any use which may be deemed obtrusive. At the same time, however, certain users, such as security staff, doctors, and the like, may be able to make full use of the functionality provided by the mobile radiotelephone network 200, even when connected through the RA-BTS. However, it should be noted that in the present embodiment there is no modification made to a RA-BTS compared to a conventional BTS.

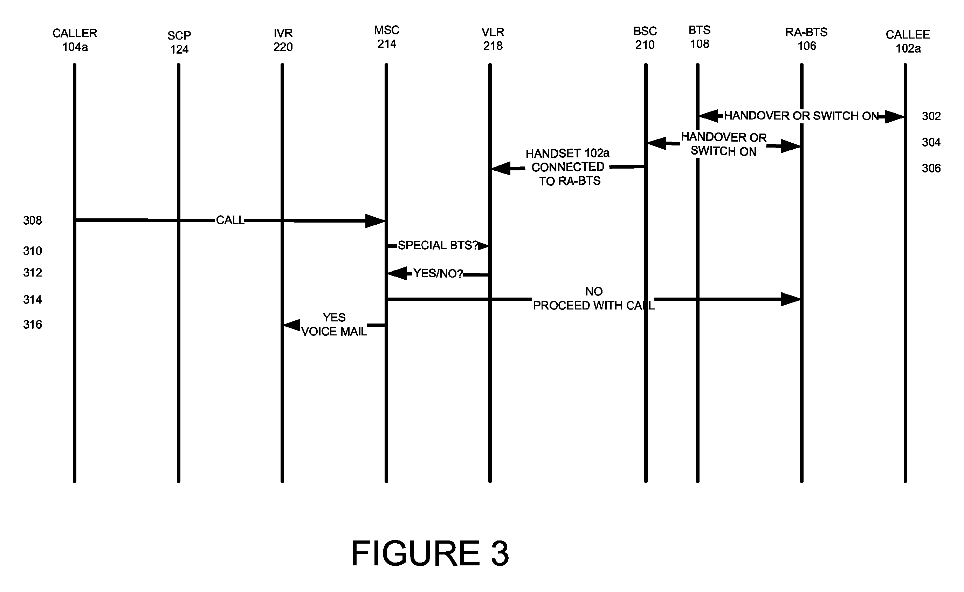

The present embodiment will now be described, with further reference to Figure 3 which is a message/event flow diagram showing example communication messages and events which are sent between various elements of the radiotelephone network 200 of Figure 2. Those skilled in the art will appreciate that the messages shown in Figures 3, 4 and 5 do not necessarily represent actual messages of any particular protocol, but are generally indicative of the type and/or nature of information which is communicated or a type of event, etc.

In the following example it is assumed that the mobile station 102a is initially in communication with the BTS 108, and is able to access the full set of functionality provided by the mobile radiotelephone network 200 in a conventional manner. At some point in time, the mobile station 102a enters into a geographical area or cell covered by BTS 106. For example, BTS 106 could be provided, in conjunction with the network operator, by the owner of a theatre. Preferably the footprint of the BTS covers any areas of the theatre in which the theatre manager wishes to restrict use of mobile communication devices such as mobile stations 102a to 102n. For example, the footprint of such a BTS could be arranged to cover the public seating area of the theatre, whilst not covering the entrance and bar areas. Those skilled in the art will appreciate that the arrangement of the footprint of such a BTS can be accomplished in a variety of different ways, such as by altering antenna configurations, transmission power, and so on, and as such is outside the scope of the present invention.

The BSC 210 detects the handover (messages 302 and 304) of mobile station 102a from BTS 108 to BTS 106. The BSC 210 is configured to know that BTS 106 is designated a restricted access BTS (RA-BTS). When the BTS 210 detects that mobile station 102a is connected through the RA-BTS 106 it informs the visitor location register (VLR) 218 (message 306), causing the VLR 218 to add a suitable flag to its entry for the mobile station 102a.

If an incoming call 308 is made from the user of, for example mobile station 104a, a message, such as an Initial Address Message (IAM) message is received by the MSC 214. In response thereto, the MSC 214 obtains, from the VLR 218 (messages 310 and 312), whether the mobile station 102a is currently connected to a RA-BTS. If the mobile station 102a is not connected to a RA-BTS, the call continues in the normal manner (message 314). However, if the mobile station 102a is connected to a RA-BTS, the call is forwarded, where available, to the voice mail system (message 316) of the mobile station 102a. Alternatively, an interactive voice response element 220 may be used to present a suitable audio message to the caller 104a, for example informing the caller that the callee is currently within a restricted area and is not currently able to receive calls.

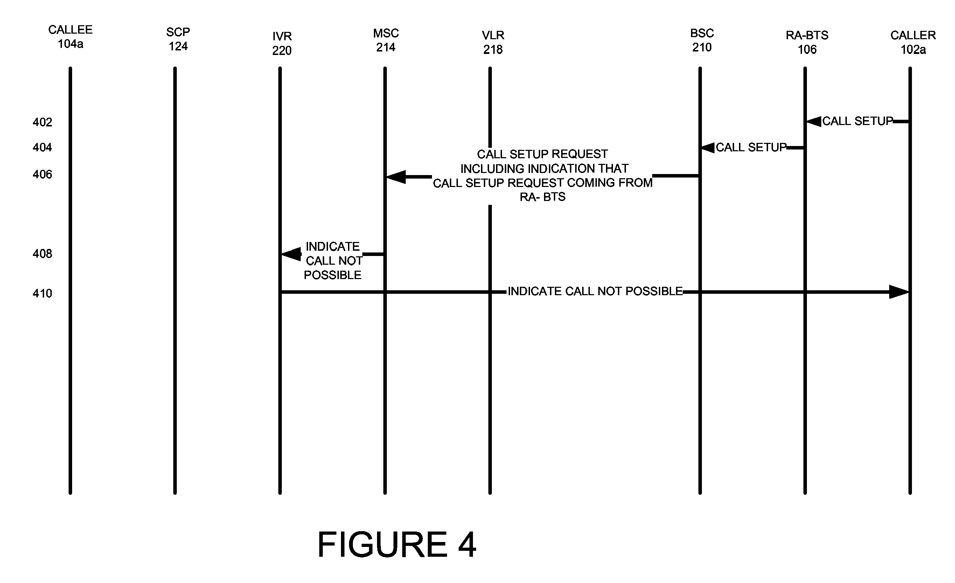

Figure 4 outlines the case where the user of the mobile station 102a attempts to place a call whilst connected through the RA-BTS 106. The user of the mobile station 102a places a call in the normal manner, for example by dialling an appropriate telephone number and actuating an appropriate button on the mobile station 102a. This causes the mobile station 102a to send a call setup request 402, such as an IAM message, to be sent via the RA-BTS 106 to the BSC 210 (message 404). The BSC 210, recognising that the call setup request 404 is originated from a mobile station connected through the RA-BTS 106, sends a call setup request including this information (message 406) to the mobile switching centre 214. The MSC 214 recognises that the call setup request is originated from a mobile station connected through a RA-BTS, and causes, through message 408, a suitable audio message 410 to be delivered to the mobile station 102a, through the IVR element 220, informing the user, for example, that he is within a restricted area and perhaps further indicating that in order to make a call the caller should move outside of the restricted area.

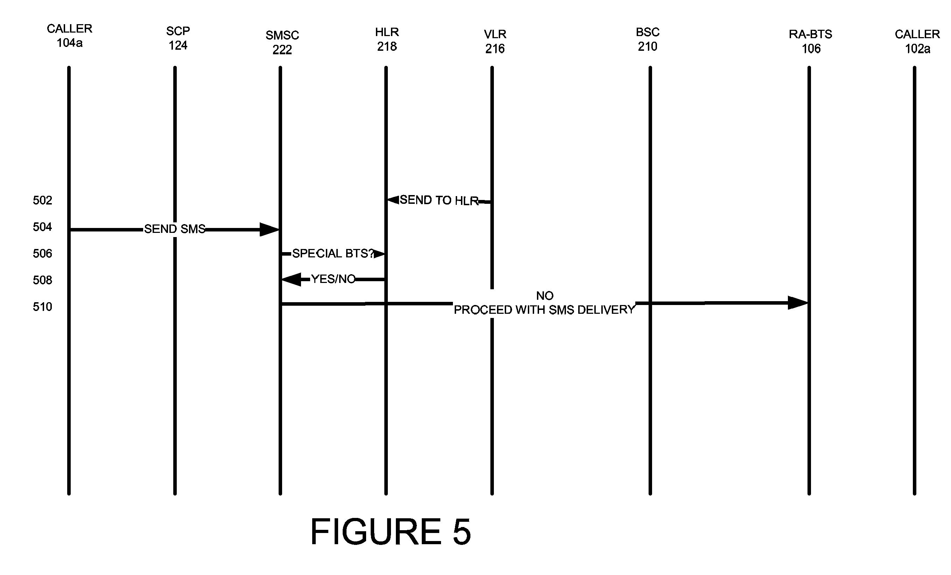

Figure 5 outlines the case where the user of the mobile station 102a is sent a short message system (SMS) message whilst connected through the RA-BTS 106. As shown in Figure 5, the VLR 218 updates the HLR 216 whenever it is determined that a mobile station is connected through a RA-BTS (message 502). Subsequently, when a caller 104a sends a SMS message to the callee 102a, a send SMS message is sent (message 504) to a SMS service centre (SMSC) 222. The SMSC 222 obtains, from the HLR 218, details of whether the callee mobile station 102a is connected through a RA-BTS (messages 506 and 508). If not, the SMS message is delivered in the conventional manner (message 510). If the mobile station 102a is connected through a RA-BTS, the SMS message is stored in the SMSC 222 until such a time that it is determined that the mobile station 102a is no longer connected through a RA-BTS, in which case the SMS message is delivered in the normal manner.

In this way, a mobile station connected through a RA-BTS may be operated in a manner which is generally deemed non-obtrusive. For example, the sending of SMS messages is permitted, as is the use of mobile data services such as Internet browsing, wireless application protocol (WAP) browsing, and the like. However, all forms of use deemed obtrusive, or at least potentially obtrusive operation, such as the making and receiving of telephone calls, the receiving of SMS messages, are prevented whilst connected through a RA-BTS.

In a further embodiment, increased control over which mobile stations can make deemed obtrusive use of a mobile station whilst connected through a RA-BTS is provided, as described below. In this embodiment a further degree of control is provided by the owner or operator of a RA-BTS supplying exception information to a service control point 124 of the mobile telephony network 200.

For example, a theatre owner may require that theatre security officers be able to make full use their mobile stations, even whilst connected through the RA-BTS 106. Furthermore, a theatre owner may charge clients a fee for enabling their mobile stations to be used whilst connected through the RA-BTS, on the condition, for example, that the owners ensure silent operation of their mobile stations. For example, silent operation can be suitably achieved by muting or removing any incoming call or message alerts. Such a provision may be particularly useful to people who are required to be contactable, such as doctors, volunteer fire-fighters, and the like.

In order to provide such exemptions, the operator of the RA-BTS, such as the theatre manager, has access to a database accessible by the SCP 124. This database (not shown) may be integral to the SCP 124 or may be external thereto. For example, a web-based interface may be provided giving the theatre manager appropriate access.

In the database, the operator can provision the telephone subscriber numbers of all persons to whom an exemption should be granted. An exemption may be a full exemption, thereby allowing such an identified mobile station to operate as if it were connected through a non-restricted access BTS. Alternatively, an exemption may be a partial exemption, for example allowing only reception of SMS messages. In this way, the operator can prevent all access to the functionality provided by the mobile telephony network 200, may enable a sub-set of the functionality to be accessible, or may enable all of the functionality to be accessible.

The operator may also enable deemed emergency numbers, such as the European-wide emergency number 112, to be callable by any mobile station connected through a RA-BTS

The operator may also enable incoming numbers flagged as urgent, or having some other priority level, to be received by mobile stations connected through a RA-BTS.

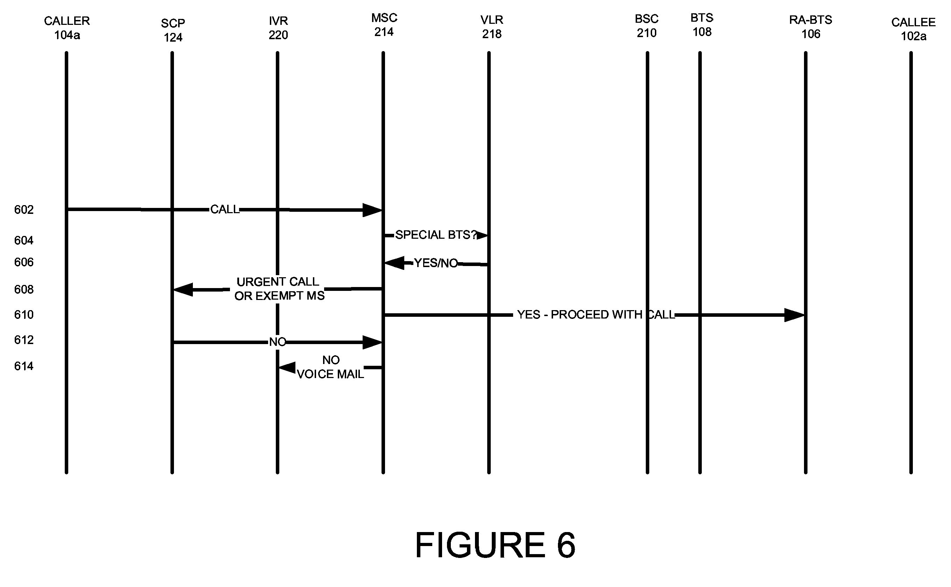

Referring now to Figure 6, there is shown the case of an incoming call 602 being made to a mobile station 102a connected through the RA-BTS 106. The MSC 214 determines (604 and 606) from the VLR 218 whether the mobile station 102a is connected through the RA-BTS 106. If it is, it determines, whether the called number has a flagged priority level. If it does have a flagged priority level the MSC interrogates the SCP 124 to determine whether the flagged priority level is higher than a threshold level previously specified by the RA-BTS 106 operator in the SCP. If the called number does have such a priority level, and the priority level is higher than the threshold level in the SCP, the call is connected in the conventional manner (610). Otherwise (612 and 614) the caller is supplied with a suitable voice message indicating that the call cannot be completed, or alternatively the caller is connected to the voice mail of the mobile station 102a.

If the dialled number has no flagged priority level, or it is of a level inferior that stored in the SCP 124, the MSC subsequently determines whether the dialled subscriber number has been granted an exemption by the operator of the RA-BTS 106. This is determined by interrogating the SCP 124. If the mobile station 102a has been granted an exemption, the call is connected (610), otherwise (612 and 614) the caller is supplied with a suitable voice message indicating that the call cannot be completed, or alternatively the caller is connected to the voice mail of the mobile station 102a.

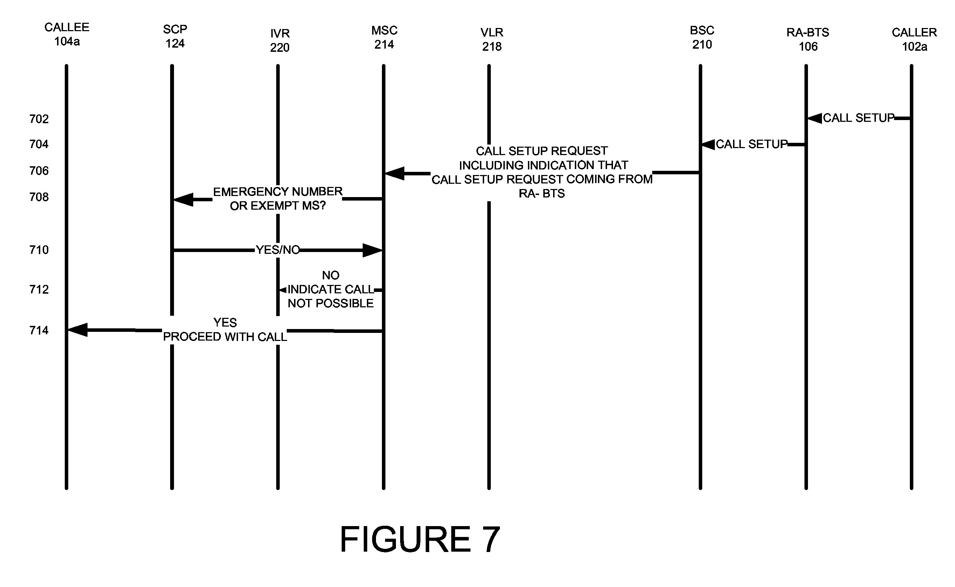

Referring now to Figure 7, there is shown the case of an outgoing call incoming call 702 being made from the mobile station 102a whilst connected through the RA-BTS 106. When the call setup request 706 is received by the MSC 214 the MSC 214 interrogates the SCP 124 to determine whether the dialled number is an exempted emergency call number stored in the SCP (708 and 710). If the dialled number is an exempted number, the call continues (714) as normal. If the dialled number is not an exempted number, the MSC determines, again through the SCP, whether the subscriber number of the mobile station 102a is an exempted telephone subscriber number. If the mobile station 102a has been granted an exemption, the call is allowed to proceed (714) in the normal manner. Otherwise, the IVR 220 delivers a suitable audio message indicating to the caller that the caller is within a restricted area and is unable to make a call.

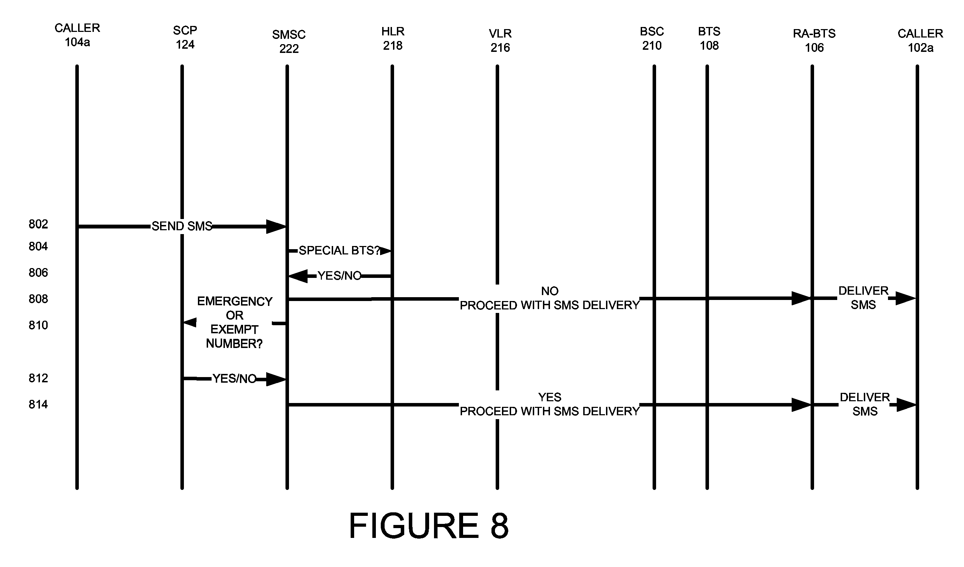

Referring now to Figure 8, there is shown the case of an SMS message being sent to the mobile station 102a connected through the RA-BTS 106. The mobile station 104a sends an SMS message to the mobile station 102a (802). When the SMSC 222 receives the message it interrogates the HLR 218 to determine whether the mobile station 102a is currently connected through a RA-BTS (804 and 806). If it is determined that the mobile station 102a is connected through a RA-BTS, the SMSC 222 interrogates the SCP 124 to determine whether the SMS message has a flagged priority level higher than a priority threshold level stored in the SCP (810). If it does, the SMS message is delivered to the mobile station (814). If not, the SMSC 222 determines, again through interrogation of the SCP 124, whether the mobile station 102a has been granted an exemption. If it is determined that an exemption has been granted, the SMS 222 message is delivered to the mobile station (814). Otherwise, the SMS message is held in the SMSC until it is determined that the mobile station 102a is no longer connected through a RA-BTS.

Those skilled in the art will appreciate alternative configurations to those presented above are possible, without detracting from the invention concepts described herein. For example, it will be appreciated that different elements of the mobile telephony network 200 could be responsible for indicating to the MSC, or other appropriate element, whether a mobile station is connect to a restricted access base transceiver station. For example, a base transceiver station could, for example, be arranged to modify all call set up requests passing therethrough to include information indicating that a mobile station is connected through a restricted access mobile station.

Those skilled in the art will appreciate that reference to herein to GSM networks is merely exemplary, and that the inventive concepts described herein may be suitably extended to other suitable networks such as AMPS, CDMA, and the like.

Those skilled in the art will also appreciate that although the present invention has been described above with reference primarily to mobile radiotelephones and mobile radiotelephone networks, the invention is in no way limited for use therein. For example, the above described techniques, methods, and apparatus may be suitably adapted for use in any suitable communication network in which a communication device connects to the communication network through a connection module. For example, it can be envisaged that similar techniques could equally be applied to 802.11x standard communications.

## Claims

1. A communication network comprising a plurality of connection modules each operable for enabling one or more communication devices to connect to the network to access a set of communication functions provided by the network,
the network being arranged such that communication devices connected through a predetermined connection module have access only to a sub-set of the set of communication functions.

2. A communication network according to claim 1, further comprising a data store for storing details of which of the sub-set of functions access is available to communication devices connected through the predetermined connection module.

3. A communication network according to claim 1 or 2, wherein the data store is arranged for further storing details of individual communication devices along with a respective associated sub-set of functions which each communication device may access.

4. A communication network according to claim 1, 2 or 3, wherein the sub-set of the set of functions ranges from containing none of the set of functions to containing the whole of the set of functions.

5. A communications network according to any previous claim, wherein the communication network is a mobile telephony network.

6. A communication network according to claim 5, wherein the connection modules are transceiver stations and wherein the communication devices are mobile radio telephones.

7. A communication network according to claim 5 or 6, further comprising a switching element, the switching element being able to identify a communication device connected to the predetermined connection module and being arranged to allow access to a sub-set of functions as defined in the data store.

8. A communication network according to any previous claim, wherein the set of communication functions includes functions relating to at least one of: making a telephone call, receiving a telephone call, sending a text message, receiving a text message, and accessing a data network.

9. A method, in a communication network, of providing a communication device with access to a set of functions provided by the network, the communication device being connectable to the network through one of a plurality of connection modules each operable to provide access to the set of communication functions provided by the network, the method comprising:
determining whether a communication device is connected to the network through a predetermined connection module; and
where it is so determined, restricting access to a sub-set of the communication functions.

10. A method according to claim 9, further comprising storing details of which of the sub-set of functions are available to a communication device connected through the predetermined connection module, and providing a so connected communication device with access to the sub-set of functions in accordance with the stored details.

11. A method according to claim 9 or 10, further comprising storing details of individual communication devices along with a respective associated sub-set of functions, and providing each communication device connected through the predetermined connection module with access to the sub-set of functions associated therewith.

12. A method according to claim 9, 10 or 11, wherein the step of storing details of the sub-set of functions available ranges from storing none of the set of functions to storing details the whole set of functions.

13. A method according to claim 9, 10, 11 or 12, adapted for use with a mobile telephony network.

14. A method according to any of claims 9 to 13, adapted for use where the connection modules are transceiver stations and wherein the communication devices are mobile radiotelephones.

15. A method according to any of claims 13 or 14, wherein the network further comprising a switching element operable to identify a communication device connected to the predetermined connection module, the method further comprising the switching unit restricting access to the set of functions according to the stored details.

16. A method according to any of claims 9 to 15, adapted for use where the set of communication functions includes functions relating to at least one of: making a telephone call, receiving a telephone call, sending a text message, receiving a text message, and accessing a data network.

17. A communication network adapted for operating in accordance with any of the claims 9 to 16.
